(19) Europäisches Patentamt
European Patent Office
Office européen des brevets

(11) Veröffentlichungsnummer: **0 035 970**
**A2**

# (12) EUROPÄISCHE PATENTANMELDUNG

(21) Anmeldenummer: **81810071.1**

(51) Int. Cl.³: **G 03 C 1/36**

(22) Anmeldetag: **02.03.81**

(30) Priorität: **07.03.80 CH 1819/80**

(43) Veröffentlichungstag der Anmeldung:
**16.09.81 Patentblatt 81/37**

(84) Benannte Vertragsstaaten:
**BE CH DE FR GB IT LI**

(71) Anmelder: **CIBA-GEIGY AG**
**Patentabteilung Postfach**
**CH-4002 Basel(CH)**

(72) Erfinder: **Steiger, Rolf, Dr.**
**Russile**
**CH-1724 Praroman(CH)**

(72) Erfinder: **Reber, Jean-François, Dr.**
**Impasse de la Colline 2**
**CH-1723 Marly(CH)**

(54) **Photographisches Negativmaterial mit mindestens einer eine desensibilisierte Silberhalogenidemulsion enthaltenden Schicht, Verfahren zu seiner Herstellung, Verwendung des Materials zur Herstellung photographischer Bilder und Verwendung von trinuklearen Heptamethincyaninen als Desensibilisatoren in den photographischen Negativmaterialien.**

(57) Photographisches Negativmaterial mit mindestens einer Schicht, die eine desensibilisierte Silberhalogenidemulsion enthält, wobei als Desensibilisator ein trinukleares Heptamethincyanin oder ein halogeniertes trinukleares Tetramethincyanin mit drei gleichen heterocyclischen Ringsystemen verwendet wird, die gegebenenfalls unterschiedlich substituiert sind und durch drei gleiche, gegebenenfalls mesomere Methinsysteme miteinander verbunden sind, eignet sich zur Verarbeitung bei gedämpftem Tageslicht, weist aber dennoch bei intensiver Belichtung eine genügende Empfindlichkeit auf.

EP 0 035 970 A2

CIBA-GEIGY AG
Basel (Schweiz)

68-12743/+

Photographisches Negativmaterial mit mindestens einer eine desensibilisierte Silberhalogenidemulsion enthaltenden Schicht, Verfahren zu seiner Herstellung, Verwendung des Materials zur Herstellung photographischer Bilder und Verwendung von trinuklearen Heptamethincyaminen als Desensibilisatoren in den photographischen Negativmaterialien.

Die vorliegende Erfindung betrifft ein photographisches Negativmaterial mit mindestens einer lichtempfindlichen Schicht, die eine desensibilisierte Silberhalogenidemulsion vom negativ arbeitenden Typ enthält.

Es ist bekannt, dass negativ arbeitende Silberhalogenidemulsionen durch gewisse Klassen von Verbindungen desensibilisiert werden können. Im allgemeinen vermindern diese Substanzen die Empfindlichkeit um einen Betrag, der logE = 1,0 übersteigt, jedoch selten über logE = 3,0 hinausgeht. Beispiele gebräuchlicher Desensibilisatoren sind Phenosafranin, Pinakryptolgelb, gewisse Bispyridiniumsalze, ferner die in den amerikanischen Patentschriften 3 501 310 und 3 501 311 beschriebenen Substanzen. Die Verwendung von Desensibilisatoren in negativ arbeitenden photographischen Silberhalogenidmaterialien ist in einer Anzahl von Patentschriften beschrieben worden, so z.B. in der englischen Patentschrift 946 476 oder in den amerikanischen Patentschriften 3 326 687, 3 579 333, 3 628 958 und 3 671 254.

Eine wichtige Anwendung von desensibilisierten Silberhalogenidemulsionen betrifft Filme für das graphische Gewerbe und für die Reproduktion technischer Zeichnungen. Auf diesem Gebiet ist es vielfach vorteilhaft, ein photographisches Material zu besitzen, das bei

hellem Gelblicht oder gar bei gegebenenfalls gedämpftem Tageslicht gehandhabt werden kann. Für derartige Anwendungen werden im allgemeinen Emulsionen bevorzugt, die um einen Faktor logE von mehr als 2,5 desensibilisiert sind und insbesondere solche, die einen besonders hohen Niedrigintensitäts-Reziprozitätsfehler aufweisen, d.h. Materialien, die bei relativ schwacher Beleuchtung eine wesentlich niedrigere Empfindlichkeit aufweisen als bei hohen Lichtintensitäten wie sie z.B. mit Gasentladungslampen oder Halogenleuchten erzeugt werden können.

Aufgabe der vorliegenden Erfindung ist es, neue, z.B. hellraumbeständige, photographische Materialien herzustellen, die aufgrund des Vorhandenseins mindestens einer desensibilisierten Silberhalogenidemulsionsschicht, bei gedämpftem Tageslicht verarbeitet werden können und dennoch bei intensiver Belichtung eine genügende Empfindlichkeit aufweisen.

Es wurde gefunden, dass gewisse Klassen von trinuklearen Cyaninen, insbesondere trinukleare Heptamethincyanine, sowie halogenierte trinukleare Tetramethincyanine hochwirksame Desensibilisatoren darstellen, mit denen im allgemeinen Desensibilisierungsfaktoren logE von 2,5 bis 6 und in Spezialfällen sogar darüber erzielt werden können.

Gegenstand der vorliegenden Erfindung ist daher ein photographisches Negativmaterial mit mindestens einer Schicht, die eine desensibilisierte Silberhalogenidemulsion enthält, dadurch gekennzeichnet, dass diese Schicht als Desensibilisator ein trinukleares Heptamethincyanin oder ein halogeniertes trinukleares Tetramethincyanin mit drei gleichen heterocyclischen Ringsystemen enthält, die gegebenenfalls unterschiedlich substituiert sind und durch drei gleiche, gegebenenfalls mesomere Methinsysteme miteinander verbunden sind.

Weitere Gegenstände der Erfindung sind das Verfahren zur Herstellung des photographischen Materials, das Verfahren zur Herstellung

photographischer Bilder unter Verwendung der erfindungsgemässen photographischen Materialien sowie die Verwendung der trinuklearen Cyanine als Desensibilisatoren in photographischen, negativ arbeitenten Materialien.

Geeignete trinukleare Cyaninfarbstoffe sind insbesondere für die Verwendung in photographischen Direktpositivmaterialien, die nach dem Oberflächenverschleierungs-Prinzip arbeiten, schon beschrieben worden. (DE-OS 2 935 333, EU-OS 22753).

Trinukleare Cyaninfarbstoffe, welche für die vorliegende Erfindung verwendet werden können, entsprechen z.B. den Formeln

(1)

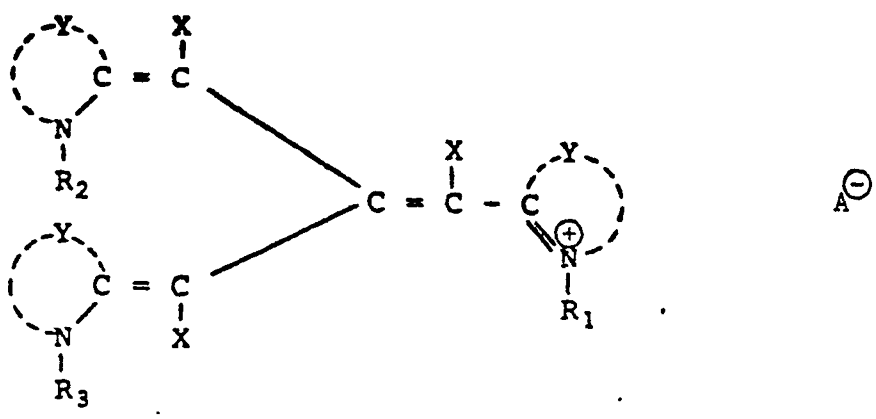

(2)

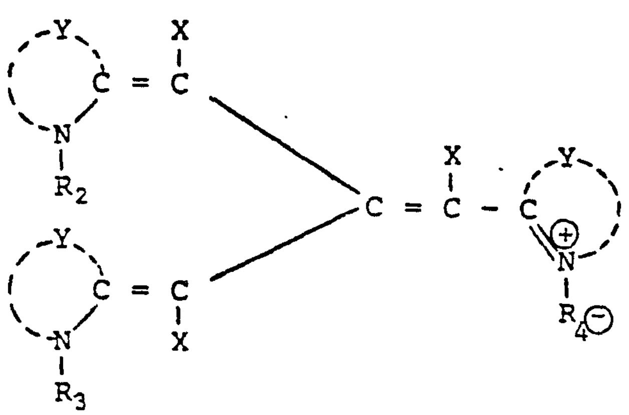

(3) 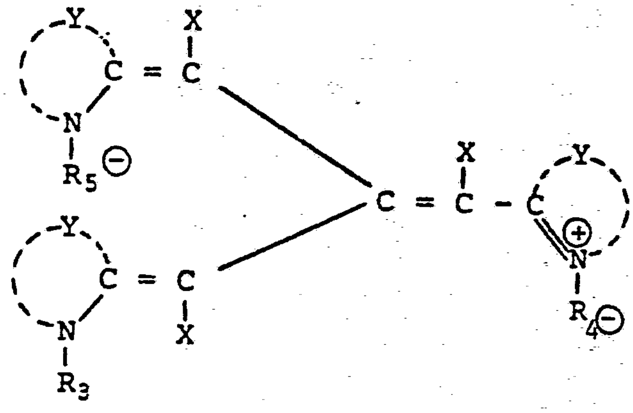 $M^{\oplus}$

oder

(4) 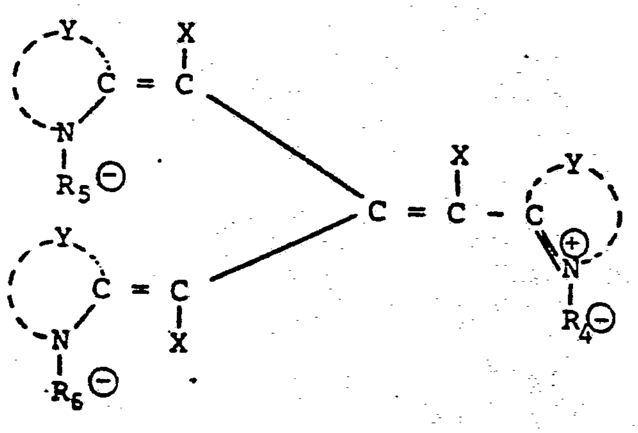 $2\ M^{\oplus}$ oder $L^{\oplus\oplus}$ ,

(5) 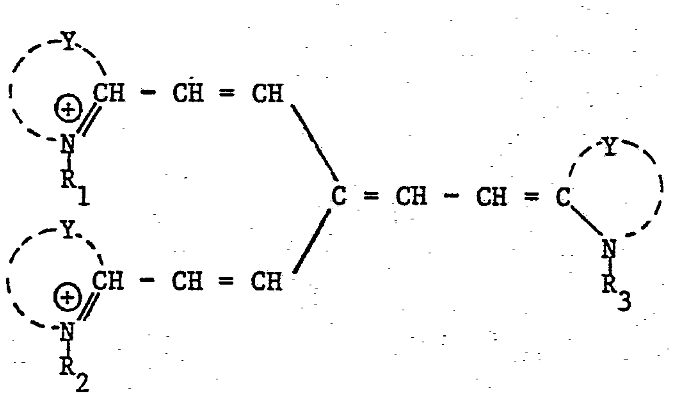 $2\ A^{\ominus}$ oder $B^{\ominus\ominus}$

(6) 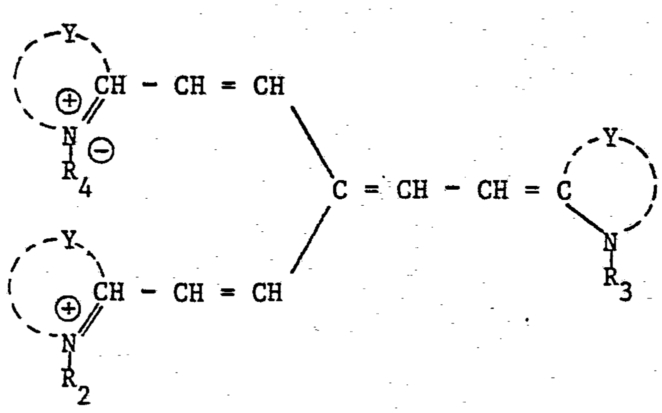 $A^{\ominus}$

(7) 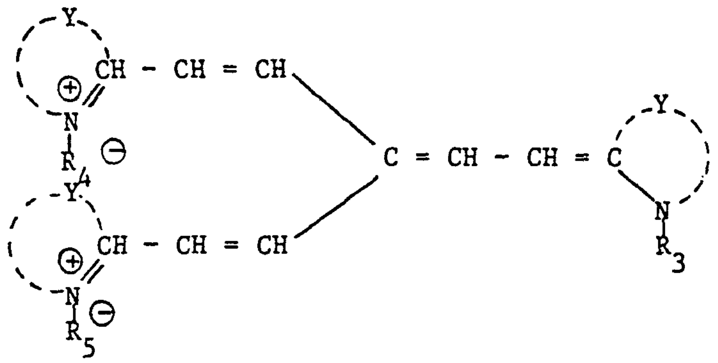

oder

(8) 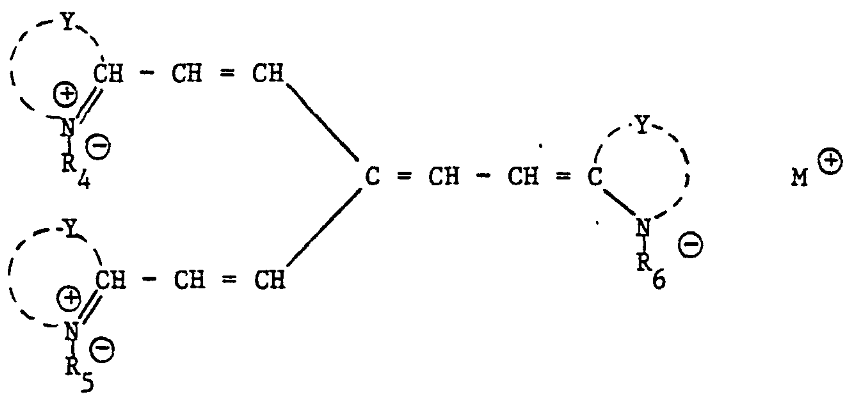

worin

Y die zur Vervollständigung eines mono- oder polyheterocyclischen Ringsystems erforderlichen Atome,

$R_1$, $R_2$ und $R_3$ je unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, substituiertes Alkyl mit 1 bis 20 Kohlenstoffatomen oder Alkenyl mit 2 bis 20, vorzugsweise 1 (2) bis 4 Kohlenstoffatomen in der Hauptkette, unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, Alkyl, Hydroxyalkyl oder Halogenalkyl mit 1 bis 4 Kohlenstoffatomen, Mono- oder Dialkylamino-, Amino-, Carbonamido- oder Sulfonamidogruppen substituiertes Aryl oder Aralkyl,

$R_4$, $R_5$ und $R_6$ je mit einer Carboxyl- oder Sulfogruppe substituiertes Alkyl oder Alkenyl mit 1 (2) bis 20 Kohlenstoffatomen, Aryl, vorzugsweise Phenyl oder Aralkyl, vorzugsweise Benzyl oder Phenyläthyl,

X Wasserstoff, Fluor, Chlor, Brom oder Jod, wobei mindestens ein Rest X Halogen ist,

$A^{\ominus}$ ein einwertiges Anion und

$M^{\oplus}$ ein einwertiges Kation

$L^{\oplus\oplus}$ ein zweiwertiges Kation

$B^{\ominus\ominus}$ ein zweiwergies Anion

bedeuten.

Geeignete Substituenten an den geannten Alkyl- oder Alkenylresten ($R_1$, $R_2$, $R_3$), die vorzugsweise 1 (2) bis 4 Kohlenstoffatome enthalten, sind beispielsweise Halogen (Fluor, Chlor, Brom), Hydroxyl, Cyan, Alkoxy mit 1 bis 4 Kohlenstoffatomen, Carbalkoxy mit 1 bis 4 Kohlenstoffatomen im Alkoxyrest; als Substituenten am Aryl und Aralkyl, die insbesondere Phenyl oder Phenyläthyl sind, kommen die gleichen Substituenten in Frage, ferner auch Alkyl, Hydroxylalkyl oder Halogenalkyl mit je 1 bis 4 Kohlenstoffatomen, sowie $-NH_2$, $-CONH_2$ oder $-SO_2NH_2$, die am Stickstoffatom auch mit Alkyl ($C_1$-$C_4$) substituiert sein können.

$R_4$, $R_5$ und $R_6$, die gleich oder verschieden sein können, sind mit Carboxyl (-COOH oder-$COO^{\ominus}$) oder der Sulfogruppe ($-SO_3H$ oder $-SO_3^{\ominus}$) substituiertes Alkyl oder Alkenyl, Aryl oder Aralkyl, worin Alkyl oder Alkenyl beispielsweise bis zu 4 Kohlenstoffatome enthalten und Ary' oder Aralkyl vorzugsweise Phenyl, Benzyl oder Phenyläthyl sind.

Bevorzugte Substituenten $R_1$ bis $R_3$ sind Methyl, Aethyl, n-Propyl, n-Butyl, iso-Butyl, Allyl, β-Methallyl, β-Methoxyäthyl, β-Aethoxyäthyl, β-Hydroxyäthyl, γ-Hydroxypropyl, Phenyl, Benzyl oder β-Phenyläthyl.

Bevorzugte Substituenten $R_4$ bis $R_6$ sind Carboxymethyl, Carboxyäthyl, Carboxypropyl, Carboxybutyl, Sulfoäthyl, Sulfopropyl, Sulfobutyl, p-Sulfobenzyl, Carbomethoxymethyl oder -äthyl oder Carboäthoxymethyl- oder -äthyl.

Als mono- oder polycyclische heterocyclische Ringsysteme kommen insbesondere solche mit 1 bis 4, vorzugsweise kondensierten Ringen in Frage, von denen mindestens ein Ring heterocyclisch ist. Ringsysteme mit 5- und/oder 6-gliedrigen Ringen sind bevorzugt.

Sie können gegebenenfalls weitere Substituenten (zusätzlich zu $R_1$, $R_2$, $R_3$. $R_4$, $R_5$ und $R_6$) aufweisen, z.B. Alkyl ($C_1$-$C_4$), insbesondere Methyl, Aryl, insbesondere, Phenyl oder Halogenalkyl ($C_1$-$C_4$), insbesondere Trifluormethyl.

Bevorzugte heterocyclische Ringsysteme sind durch die nachfolgenden Formeln angegeben. Aus Gründen der Einfachheit wird jeweils nur eine mesomere Struktur angegeben. R hat die für $R_1$ bis $R_6$ angegebenen Bedeutungen.

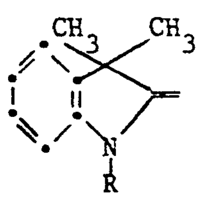 , insbesondere 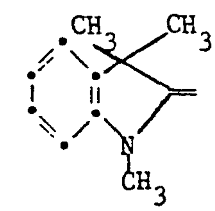 , 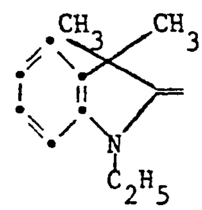 , 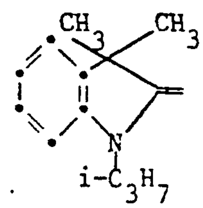 ,

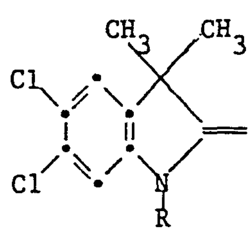 ; 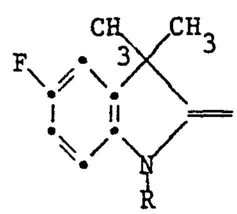 ; 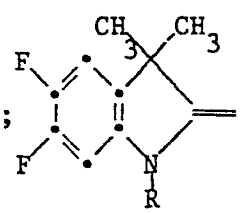

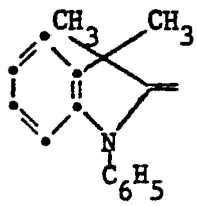 oder 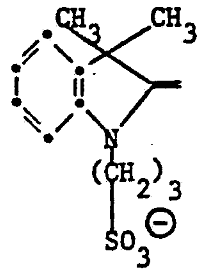 ; 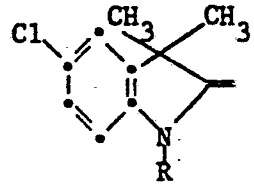 ; 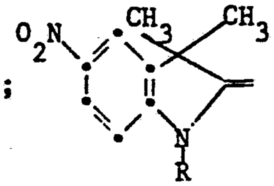 ;

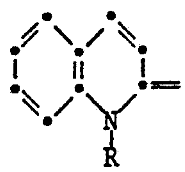 insbesondere 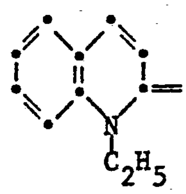 , 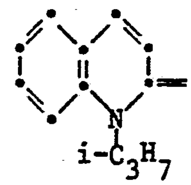 oder 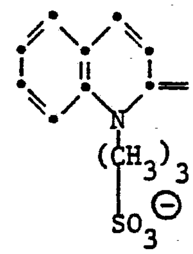

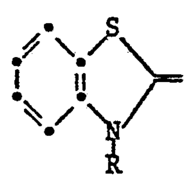 insbesondere 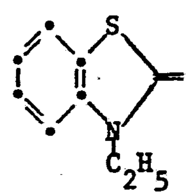 , 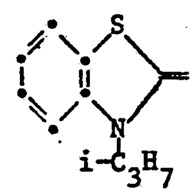 oder 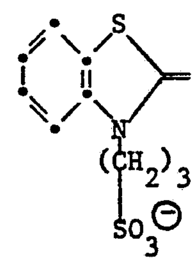

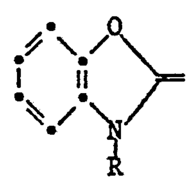 insbesondere 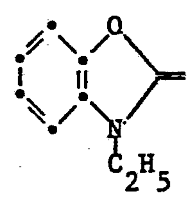 , 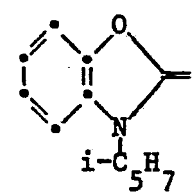 oder 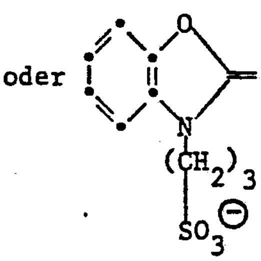

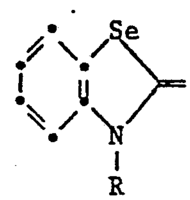 insbesondere 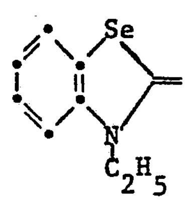 , 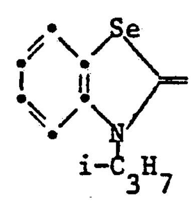 oder 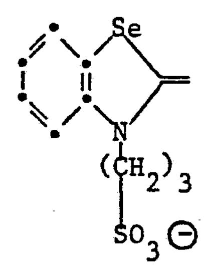

; 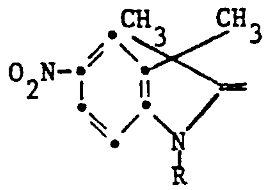 oder 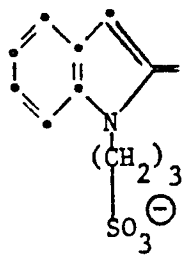

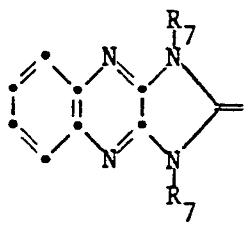 insbesondere 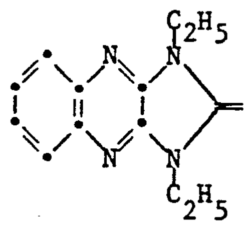 oder 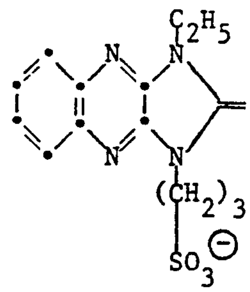

($R_7$ = Alkyl mit 1 bis 4 Kohlenstoffatomen)

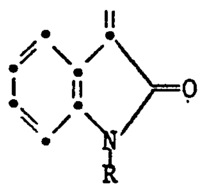 insbesondere 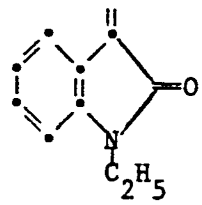 oder 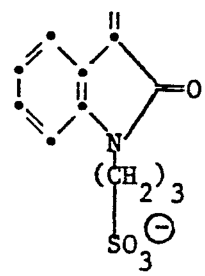

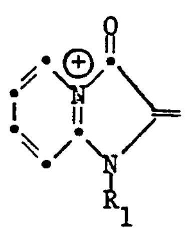 insbesondere 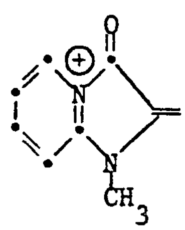 oder 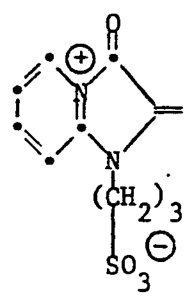

ferner 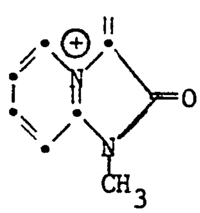 oder 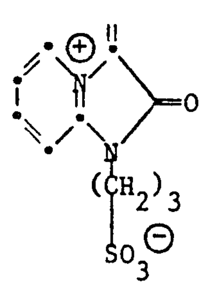

weitere geeignete Heterocyclen entsprechen den folgenden Formeln:

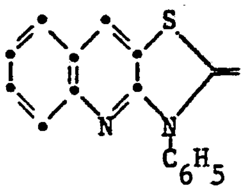
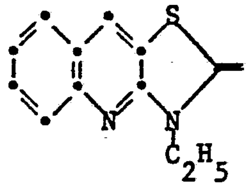
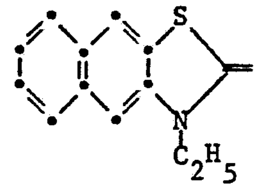
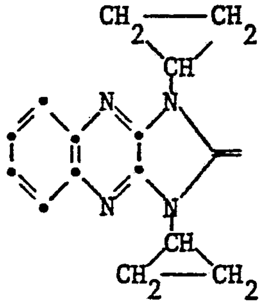
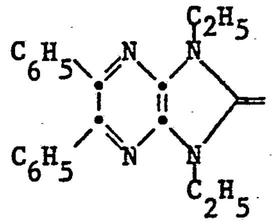
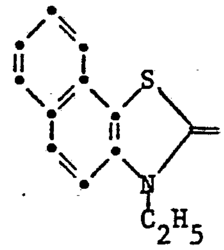
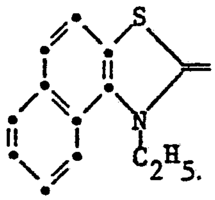
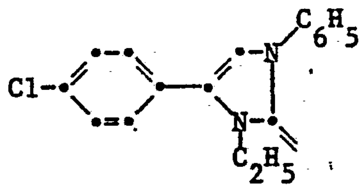
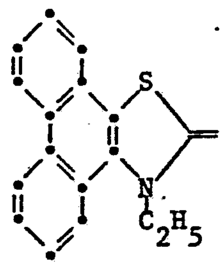
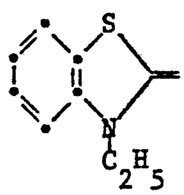
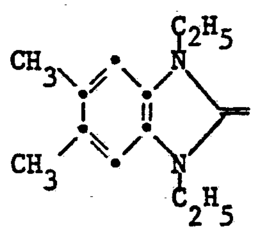
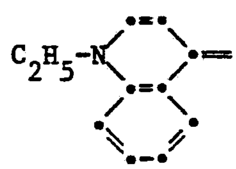
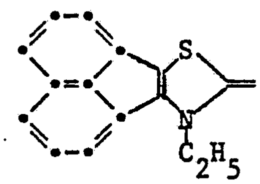
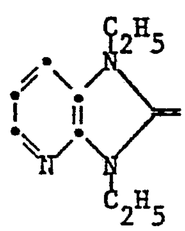
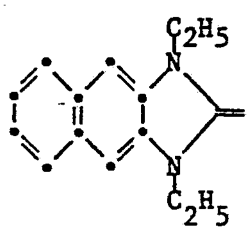
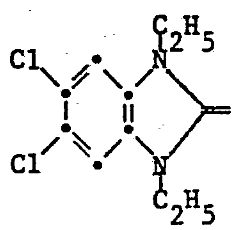
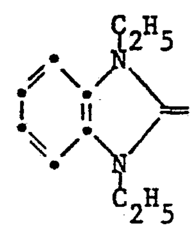
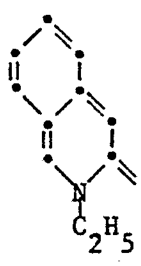
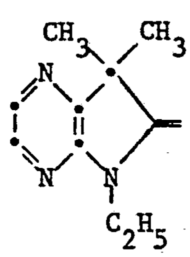
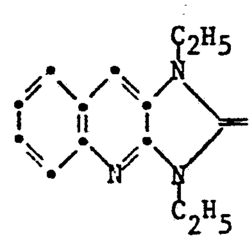
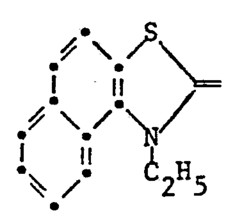

0035970



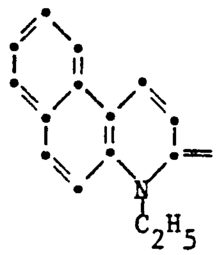
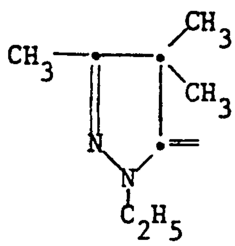
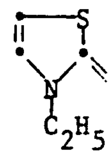
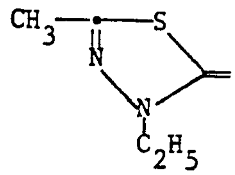

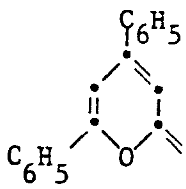
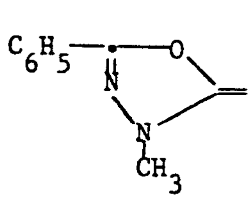
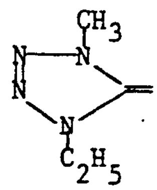
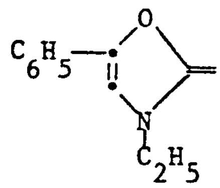

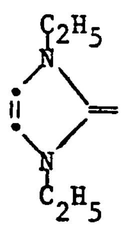
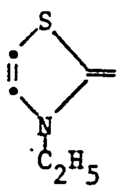
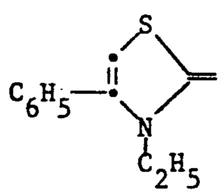
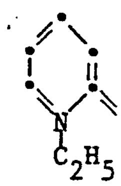
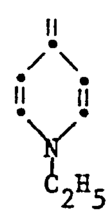

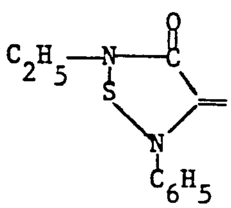
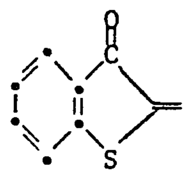
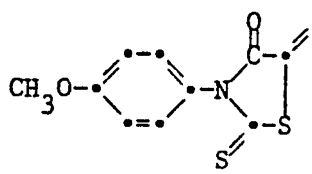
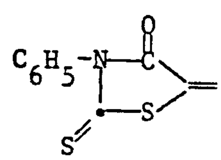

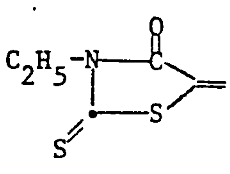
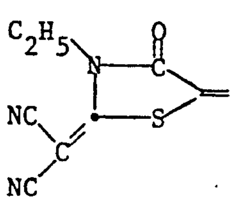
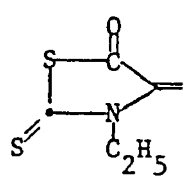
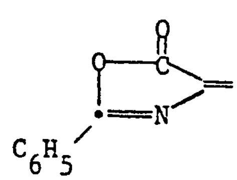

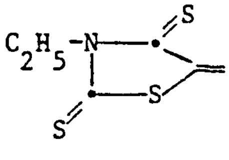
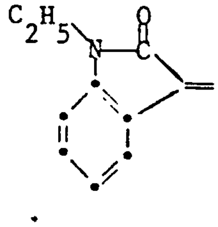
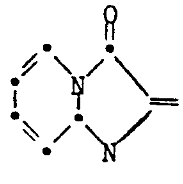
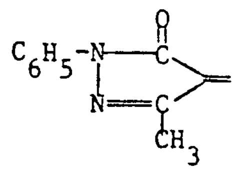

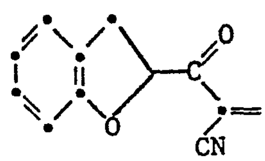
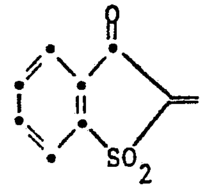
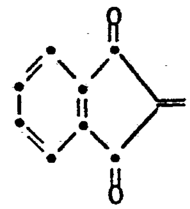
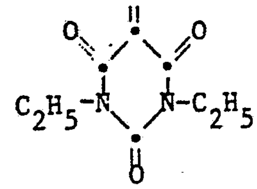

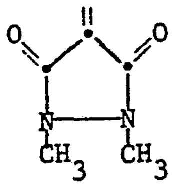
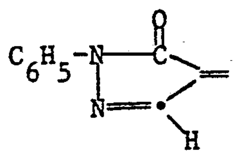
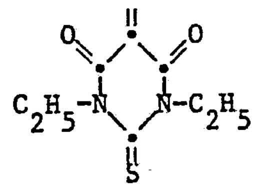
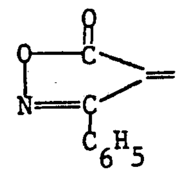

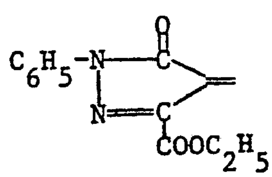
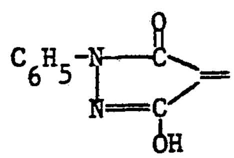
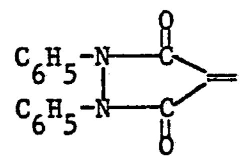

Die vorgenannten Heterocyclen mit Betainstrukturen, z.B. $-(CH_2)_n-COO^{\ominus}-$ oder $-(CH_2)_nSO_3^{\ominus}-$ Substituenten an einem Stickstoffatom, sind ebenfalls geeignet (n = 1-4).

Die für die Herstellung von Cyaninfarbstoffen geeigneten Heterocyclen sind z.B. aus D.M. Sturmer, Syntheses and Properties of Cyanine and Related Dyes in Chemistry of Heterocyclic Compounds, Vol. 30, (1977), herausgegeben von A. Weissberger und E.C. Taylor bekannt.

Als Anionen $A^{\ominus}$ in den Verbindungen der Formel (1), (5) und (6) kommen insbesondere die Halogenide, wie Chlorid, Bromid oder Jodid, ferner Nitrat, Tetrafluorborat, Perchlorat, Rhodanid und p-Toluolsulfonat, sowie Hydrogensulfat in Betracht. Zweiwertige Anionen sind z.B. $SO_4^{\ominus\ominus}$, $CO_3^{\ominus\ominus}$, $HPO_3^{\ominus\ominus}$ etc.

Die einwertigen Kationen ($M^{\oplus}$ in den Verbindungen der Formel (3), (4) und (8) sind beispielsweise Wasserstoff, Alkalimetalle (Natrium, Kalium), Ammonium oder gegebenenfalls substituiertes Ammonium. Zweiwertige Kationen sind beispielsweise Magnesium-und

andere Erdalkalimetallionen.

Synthese und Eigenschaften von trinuklearen, jedoch nicht halogenierten Cyaninfarbstoffen sind beschrieben in C.Reichhardt und W. Mormann, Chem. Ber. 105, 1815 (1972); C. Reichhardt und K. Halbritter, Chem. Ber. 104, 822 (1971); F.Baer und H. Oehling, Org. Magnet. Resonance 6, 421 (1974); C. Reichhardt, Tetrahedron Letters 1967, 4327.

Die erfindungsgemäss verwendeten halogenierten trinuklearen Tetramethincyaninfarbstoffe werden aus bekannten Cyaninfarbstoffen durch Halogenierung mit üblichen Halogenierungsmitteln erhalten. Geeignete Halogenierungsmittel, die in gegebenenfalls wässrigen Alkohollösungen (Methanol, Aethanol) eingesetzt werden, sind z.B. elementare Halogene, wie Fluor, Chlor, Brom oder Jod, ferner N-Chlorsuccinimid, N-Bromsuccinimid, N-Jodsuccinimid oder Halogen-Pyrrolidon Komplexe; ferner N-Chlorbenzotriazol und Chlorjod.

Besonders bevorzugte trinukleare Heptamethincyaninfarbstoffe und halogenierte trinukleare Tetramethincyaninfarbstoffe entsprechen den Formeln

(9)

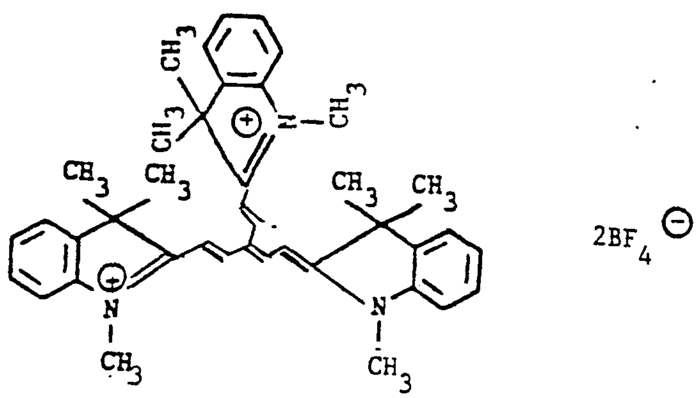

(10)

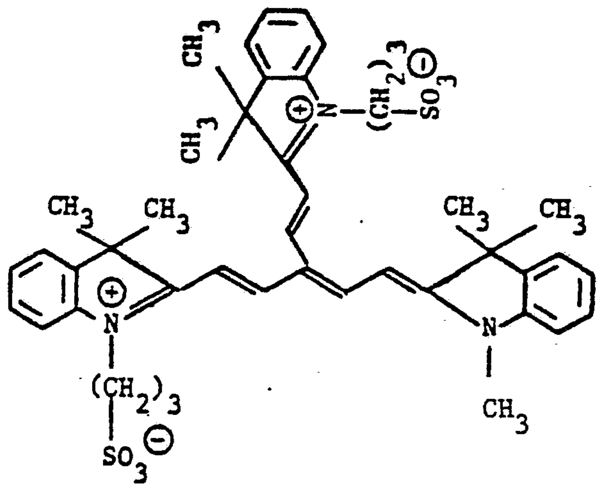

(11)

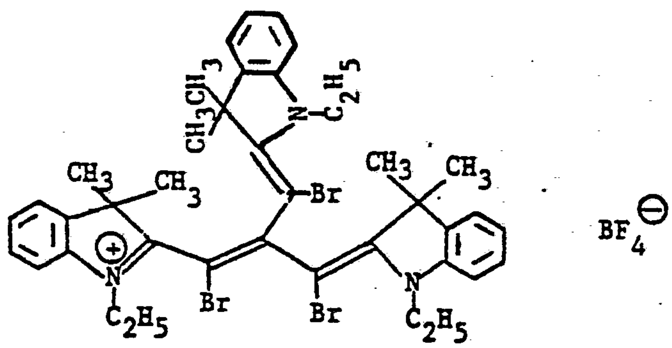

(12)

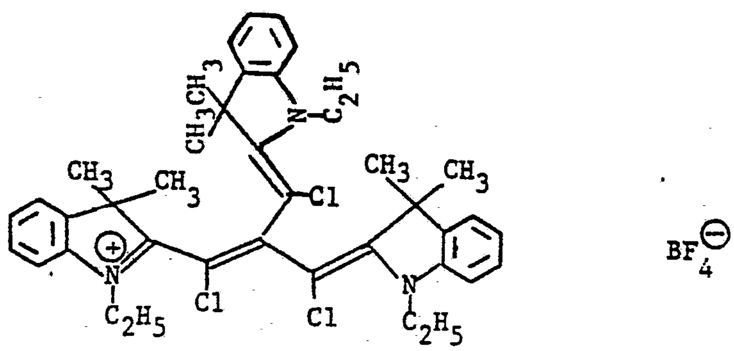

(13)

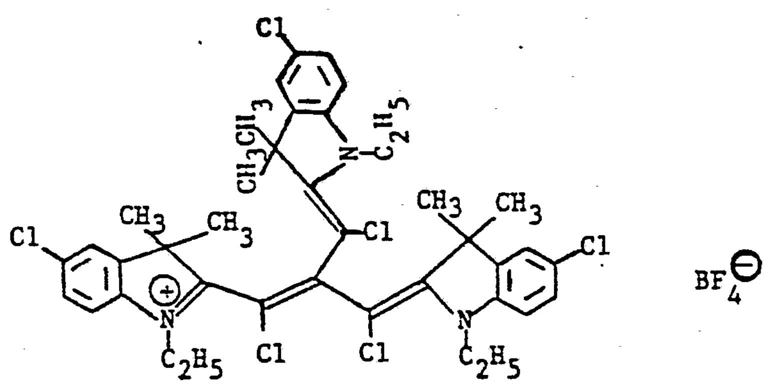

(14) 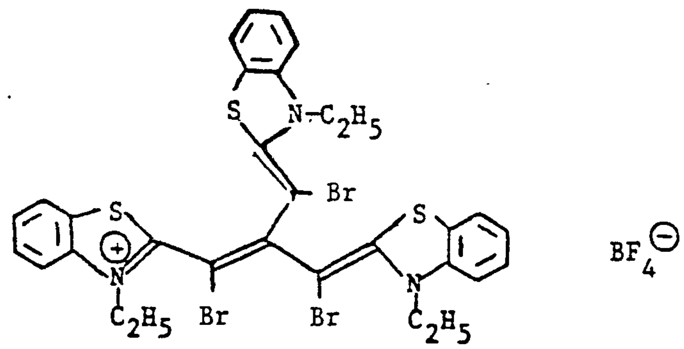

Die Densensibilisatoren können in den Silberhalogenidemulsionen in verschiedensten Konzentrationen vorliegen. In der Regel werden sie in solchen Konzentrationen angewandt, dass eine Desensibilisierung logE von mehr als 2,5 (bis 6,0) erzielt wird.

Die maximale Menge sollte so gewählt werden, dass die Silberhalogenidemulsionen nicht nachteilig beeinflusst werden. In der Regel können pro Mol Silberhalogenid etwa bis 1000, vorzugsweise bis 500 mg Desensibilisator eingesetzt werden. Die minimale Menge an Desensibilisator, die zu einer Desensibilisierung um mehr als 2,5 logE ausreicht, beträgt etwa 15-30 mg pro Mol Silberhalogenid.

Die erfindungsgemässen photographischen Materialien weisen - wenn sie z.B. als Hellraum-beständiges Material verwendet werden - nach 10 Minuten Belichtung (Gelblicht) bei einer Belichtungsstärke von 100 Lux und anschliessender Silberentwicklung eine Dichte von weniger als 0,1 auf.

Die zur Herstellung des erfindungsgemässen photographischen Materials verwendeten Silberhalogenidemulsionen können z.B. Silberbromid, Silberjodid, Silberchlorid, Silberchlorbromid, Silberjodbromid und Silberchlorjodbromid enthalten. Emulsionen, die ausschliesslich Silberchlorid enthalten, sind nicht geeignet. Gute Ergebnisse werden auch bei Verwendung mindestens einer photographischen Emulsionsschicht erhalten, die Silberchlorjodid, Silberjodbromid oder Silberchlorjodbromid mit einem Jodgehalt von z.B. 1 bis 20 Mol-% enthält. Es kann sich hierbei um übliche negative Emulsionen handeln. Die Emulsionen können die üblichen Zusätze, wie z.B. Härter, Sensibilisatoren, Stabilisatoren, Netzmittel, Weichmacher, Aufheller und Antischleiermittel enthalten.

Als Bindemittel für die photographischen Schichten wird vorzugsweise Gelatine verwendet. Diese kann jedoch ganz oder teilweise durch andere natürliche Bindemittel sind z.B. Alginsäure und deren Derivate wie Salze, Ester oder Amide, Cellulosederivate wie Carboxymethylcellulose, Alkylcellulose wie Hydroxyäthylcellulose, oder Stärke und deren Derivate wie Aether oder Ester geeignet. Als synthetische Bindemittel können beispielsweise Acrylharze, Polyvinylalkohol, teilweise verseiftes Polyvinylacetat oder Polyvinylpyrrolidon infrage kommen. Schichtträger für das erfindungsgemässe photographische Material sind die für diesen Zweck üblichen und geeigneten Folien, z.B. aus Cellulosenitrat, Celluloseacetat, wie Cellulosetriacetat, Polystyrol, Polyestern, wie Polyäthylenterephthalat, Polyolefinen wie Polyäthylen oder Polypropylen, ferner gegebenenfalls beschichtete Papiere, wie z.B. polyäthylenbeschichtete Papiere, sowie Glas.

Die erfindungsgemäss verwendeten Desensibilisatoren können nach üblichen Methoden in die photographischen Emulsionen eingearbeitet werden, z.B. indem man sie als Lösung in Alkoholen, insbesondere Trifluoräthanol und Methanol, ferner Dimethylsulfoxyd zu den Emulsionen zugibt.

Die photographischen Materialien können ausser der oder den lichtempfindlichen Schichten noch weitere Schichten, wie Schutzschichten, Filterschichten, Lichthofschutzschichten, sowie ferner Schichten mit weiteren bildwirksamen Bestandteilen, wie Farbkupplern oder bleichbaren Farbstoffen, enthalten.

Die Verarbeitung (Entwicklung, Bleichung, Fixierung) erfolgt ebenfalls nach üblichen Methoden. Die mit den erfindungsgemäss verwendeten trinuklearen Cyaninen desensibilisierten Emulsionen weisen den erwünschten Reziprozitätsfehler . auf und sind deshalb bei niedriger Beleuchtungsintensität wesentlich unempfindlicher als bei

hoher. Sie eignen sich deshalb in hervorragender Weise zur Herstellung photographischer Materialien, die bei gedämpftem Tageslicht noch gefahrlos manipuliert werden können, jedoch unter normalen Anwendungsbedingungen, z.B. bei Blitzbelichtung, noch eine ausreichende Empfindlichkeit besitzen.

In den nachfolgenden Beispielen beziehen sich die Teile und Prozente auf das Gewicht, sofern nicht anders angegeben.

Beispiel 1: Eine kubisch-monodisperse Silberjodobromidemulsion, deren Kristalle eine mittlere Kantenlänge von 0,28 μ besitzen und einen Gehalt von 1,6 Mol-Prozent Silberjodid aufweisen, wird während 90 Minuten bei 54°C einer Gold-Schwefelreifung unterworfen, wobei ein pH-Wert von 6,8 und ein pAg-Wert von 8,1 eingehalten werden.

Die so erhaltene Emulsion wird in 14 gleiche Teile aufgeteilt, die gemäss der Tabelle 1 mit verschiedenen methanolischen Lösungen des Desensibilisators der Formel (9) versetzt werden. Die so behandelten Emulsionen werden je auf einen pH-Wert von 6,0 und einen pAg-Wert von 8,4 eingestellt und danach mit einer Schichtdicke entsprechend 2,3 g Silber und 3,2 g Gelatine pro $m^2$ auf einen Polyesterträger vergossen. Nach der Trocknung werden die Proben hinter einem Stufenkeil mit gewöhnlichem Wolfram-Glühlicht mit einer Intensität von 500 Lux während 20 Sekunden belichtet und danach mit einer Entwicklerlösung der folgenden Zusammensetzung entwickelt.

| | | |
|---|---|---|
| N-Methyl-p-aminophenolsulfat | 2,0 | g |
| Natriumsulfit, wasserfrei | 75,0 | g |
| Hydrochinon | 8,0 | g |
| Natriumcarbonat, wasserfrei | 37,5 | g |
| Kaliumbromid | 2,0 | g |
| Wasser zu | 3000 | ml |

Die Auswertung der belichteten und entwickelten Stufenkeile ergibt die in der Tabelle 1 wiedergegebenen sensitometrischen Werte. Aus der Tabelle ist klar ersichtlich, dass das Cyanin der Formel (9) eine stark desensibilisierende Wirkung aufweist, die innerhalb des untersuchten Bereiches parallel zur zugegebenen Menge an Stärke zunimmt.

Tabelle 1

| Probe Nr. | Desensibilisator Verb. Nr. | (mg/Mol AgBr) | Empfindlichkeit $\log S_{50}$* | Kontrast $\gamma$ | $D_{min}$ |
|---|---|---|---|---|---|
| 1 | | -- | 2.50 | 2.5 | 0.02 |
| 2 | | 1.3 | 2.25 | 2.9 | 0.04 |
| 3 | | 3.3 | 1.98 | 2.8 | 0.04 |
| 4 | | 6.7 | 1.66 | 2.7 | 0.04 |
| 5 | | 13.3 | 1.29 | 2.5 | 0.04 |
| 6 | | 26.7 | 0.82 | 2.7 | 0.04 |
| 7 | (9) | 33.3 | 0.65 | 2.3 | 0.02 |
| 8 | | 66.7 | 0.18 | 2.4 | 0.03 |
| 9 | | 133 | -0.26 | 2.2 | 0.03 |
| 10 | | 267 | -0.43 | 2.5 | 0.03 |
| 11 | | 400 | -0.28 | 2.6 | 0.02 |
| 12 | | 533 | -0.27 | 2.6 | 0.03 |
| 13 | | 667 | -0.25 | 2.9 | 0.03 |
| 14 | | 800 | -0.21 | 2.7 | 0.03 |

* Lux. sec. bei 50 % der Maximaldichte: $\log S_{50} = 3-\log E$ (E in Lux.sec.)

In den folgenden Beispielen wird die desensibilisierende Wirkung verschiedener halogenierter trinuklearer Cyanine gemäss der vorliegenden Erfindung auf photographische Emulsionen gezeigt.

Beispiel 2: Eine kubisch-monodisperse Silberjodobromidemulsion mit einer mittleren Kantenlänge der Kristalle von 0,23 µ, enthaltend 1,6 Mol-Prozent Silberjodid wird in identischer Weise wie die in Beispiel 1 beschriebene Emulsion chemisch gereift. Die so erhaltene Emulsion wird in 27 Teile geteilt und mit methanolischen Lösungen der Desensibilisatoren der Formeln (11) und (12) gemäss der nachfolgenden Tabelle 2 versetzt. Die so behandelten Emulsionen werden auf einen pH-Wert von 5,5 und einen pAg-Wert von 8,2 eingestellt und danach mit einer Schichtdicke entsprechend 2,0 g Silber und 2,5 g Gelatine pro $m^2$ auf eine Polyesterunterlage vergossen. Nach der Trocknung werden die Proben mit einer Beleuchtungsintensität von 30'000 Lux während so langer Zeit belichtet, wie für die Bildung eines latenten Bildes notwendig ist, und danach gleich wie die Proben von Beispiel 1 entwickelt.

Die dabei erhaltenen sensitometrischen Resultate sind in der nachfolgenden Tabelle 2 zusammengestellt. Die Empfindlichkeiten $S_{50}$ können Werte bis maximal (-4) erreichen.

Tabelle 2

| Probe Nr. | Desensibilisator Verb. Nr. | (mg/Mol AgBr) | Empfindlichkeit log $S_{50}$* | Kontrast γ | $D_{min}$ |
|---|---|---|---|---|---|
| 15 | | -- | 2.16 | 2.9 | 0.03 |
| 16 | | 0.7 | 1.68 | 2.5 | 0.03 |
| 17 | | 1.3 | 1.25 | 2.1 | 0.03 |
| 18 | | 3.3 | 0.68 | 2.1 | 0.03 |
| 19 | | 6.7 | 0.17 | 2.4 | 0.03 |
| 20 | | 13.3 | -0.37 | 2.6 | 0.01 |
| 21 | (11) | 33.3 | -0.96 | 3.0 | 0.01 |
| 22 | | 66.7 | -1.69 | 3.2 | 0.01 |
| 23 | | 133 | -2.18 | 2.5 | 0.01 |
| 24 | | 267 | -2.89 | 2.2 | 0.01 |
| 25 | | 467 | -3.22 | 2.1 | 0.02 |
| 26 | | 667 | -3.08 | 2.4 | 0.02 |
| 27 | | 800 | -3.17 | 2.1 | 0.03 |
| 28 | | 933 | -3.19 | 2.1 | 0.04 |
| 29 | | 0.7 | 1.87 | 2.4 | 0.01 |
| 30 | | 1.3 | 1.53 | 2.2 | 0.02 |
| 31 | | 3.3 | 0.98 | 2.1 | 0.01 |
| 32 | | 6.7 | 0.47 | 2.1 | 0.02 |
| 33 | | 13.3 | -0.10 | 2.4 | 0.01 |
| 34 | | 33.3 | -0.90 | 2.4 | 0.02 |
| 35 | (12) | 66.7 | -1.52 | 2.6 | 0.02 |
| 36 | | 133 | -2.47 | 2.9 | 0.02 |
| 37 | | 267 | -3.44 | 2.5 | 0.02 |
| 38 | | 467 | -3.56 | 2.6 | 0.02 |
| 39 | | 667 | -3.66 | 2.3 | 0.04 |
| 40 | | 800 | -3.42 | 2.7 | 0.05 |
| 41 | | 933 | -3.87 | ca.-2.5 | 0.06 |

* Lux. sec. bei 50 % der Maximaldichte: log $S_{50}$* = 3-logE

(E in Lux.sec.)

Beispiel 3: Eine Silberjodobromid-Emulsion, welche mit derjenigen von Beispiel 2 identisch ist, wird in neun Teile geteilt und gemäss der nachfolgenden Tabelle 3 mit verschiedenen Mengen des halogenierten trinuklearen Cyanins der Formel (14), gelöst in Methanol, versetzt. Nachdem der pH-Wert auf 5,0 und der pAg-Wert auf 8,2 eingestellt ist, werden die neun Emulsionsproben gleich wie im Beispiel 2 beschrieben auf eine Polyesterunterlage vergossen.

Nach Trocknung der Proben wird gleich wie im Beispiel 1 belichtet. Es ergeben sich die folgenden sensitometrischen Werte:

Tabelle 3

| Probe Nr. | Cyanin der Formel (14) (mg/Mol AgBr) | Empfindlichkeit log $S_{50}$* | Kontrast γ | $D_{min}$ |
|---|---|---|---|---|
| 42 | 0 | 2.36 | 3.2 | 0.04 |
| 43 | 6.7 | 0.87 | 1.8 | 0.03 |
| 44 | 13.3 | 0.39 | 1.8 | 0.03 |
| 45 | 33.3 | -0.28 | 1.9 | 0.02 |
| 46 | 100 | -1.64 | 2.0 | 0.02 |
| 47 | 200 | -2.38 | 2.3 | 0.02 |
| 48 | 400 | -2.90 | 2.6 | 0.02 |
| 49 | 600 | -3.41 | 2.6 | 0.03 |
| 50 | 867 | -3.61 | 2.5 | 0.04 |

* Lux. sec. bei 50 % der Maximaldichte: log $S_{50}$ = 3-logE (E in Lux. sec.)

Beispiel 4: Eine Schwefel-Gold-gereifte Silberjodobromidemulsion, welche mit derjenigen des Beispiels 2 identisch ist, wird in 10 Teile aufgeteilt. Die 10 Emulsionsproben werden gemäss der Tabelle 4 mit verschiedenen Mengen der Verbindung der Formel (13) in methanolischer Lösung versetzt. Die 10 Proben werden in gleicher Weise wie diejenigen des Beispiels 2 auf eine Polyesterunterlage vergossen.

Nachdem, wie im Beispiel 2 angegeben, belichtet und entwickelt wurde, enthält man die folgenden sensitometrischen Resultate:

Tabelle 4

| Probe Nr. | Cyanin der Formel (13) (mg/Mol AgBr) | Empfindlichkeit log $S_{50}$* | Kontrast γ | $D_{min}$ |
|---|---|---|---|---|
| 51 | 0 | 2.43 | 2.8 | 0.02 |
| 52 | 3.3 | 0.86 | 1.6 | 0.02 |
| 53 | 6.7 | 0.29 | 1.5 | 0.01 |
| 54 | 13.3 | -0.61 | 1.8 | 0.02 |
| 55 | 33.3 | -1.31 | 2.1 | 0.02 |
| 56 | 100 | -2.07 | 2.8 | 0.02 |
| 57 | 200 | -2.60 | 3.1 | 0.02 |
| 58 | 400 | -3.06 | 3.0 | 0.02 |
| 59 | 600 | -3.00 | 3.0 | 0.02 |
| 60 | 867 | -2.88 | 2.0 | 0.03 |

* Lux. sec. bei 50 % der Maximaldichte: $\log S_{50} = 3-\log E$ (E in Lux.sec.)

In den nachfolgenden Beispielen 5 und 6 wird dargestellt, wie photographische, negativ arbeitende Emulsionen, die erfindungsgemäss mit verschiedenen Desensibilisatoren in wechselnden Mengen behandelt werden, als Hellicht-beständige Materialien verwendet werden können. Dazu wird von jeder Probe je ein Stück einer normalen Blitzbelichtung ausgesetzt und die Empfindlichkeit bestimmt, und ein zweites Stück während 10 Minuten unter einer Wolframlampe einer Beleuchtung von 100 Lux, entsprechend einer gedämpften Glühlampenbeleuchtung ausgesetzt, wobei der entstehende Schleier gemessen wird.

Beispiel 5: Die verwendeten Proben entsprechen den mit gleicher Nummer bezeichneten aus den vorhergehenden Beispielen 2 bis 4. Ihre photographische Empfindlichkeit wird bestimmt durch Belichtung mit einem Elektronenblitz BRAUN F 700 Professional (Blitzenergie 120 Joule, Reflektoröffnung 85°). Die Distanz zwischen Blitzröhre und Material beträgt 58 cm. Es wird der gleiche Entwickler verwendet wie im Beispiel 1.

Die nachfolgende Tabelle 5 zeigt, dass alle untersuchten Proben einen recht hohen Niederintensitäts-Reziprozitätsfehler aufweisen. Sie sind infolgedessen bei der angewandten intensiven Blitzbelichtung genügend empfindlich für eine normale Verwendung. Anderseits ist nach 10 Minuten Belichtung mit 100 Lux, unter einer Wolframlampe, nur ein unbedeutender Schleier festzustellen. Ersetzt man die Belichtung mit gedämpftem Wolframlicht durch eine energetisch entsprechende Belichtung mit gedämpftem Tageslicht, welches noch einen geringfügigen UV-Anteil aufweist, so erhält man praktisch gleichwertige Resultate.

Tabelle 5

| Probe Nr. | Desensibilisator Verb. Nr. | (mg/Mol AgBr) | Empfindlichkeit Flash log $S_{0.5}$** | Schleier bei 100 Lux/ 10 Minuten |
|---|---|---|---|---|
| 38 | (12) | 467 | -1.41 | 0.02 |
| 40 | (12) | 800 | -1.28 | 0.04 |
| 41 | (12) | 933 | -1.74 | 0.02 |
| 26 | (11) | 667 | -1.59 | 0.04 |
| 27 | (11) | 800 | -1.43 | 0.03 |
| 28 | (11) | 933 | -1.36 | 0.02 |
| 48 | (14) | 400 | -1.05 | 0.04 |
| 49 | (14) | 600 | -1.50 | 0.03 |
| 50 | (14) | 867 | -1.65 | 0.04 |
| 57 | (13) | 200 | -0.74 | 0.05 |
| 58 | (13) | 400 | -1.06 | 0.05 |
| 59 | (13) | 600 | -0.86 | 0.07 |
| 60 | (13) | 867 | -0.87 | 0.15 |

**) Lux. sec. bei 0.5 optischer Dichte $\log S_{0.5} = 3-\log E$ (E in Lux.sec.)

Beispiel 6: Eine mit derjenigen des Beispiels 2 identische Silberjodobromidemulsion wird in fünf gleich grosse Teile geteilt, welche gemäss der nachfolgenden Tabelle 6 mit verschiedenen Mengen einer methanolischen Lösung der Verbindungen der Formel (9) oder (10) versetzt werden. Nach Einstellung des pH-Wertes auf 5,5 und des pAg-Wertes auf 8,2 werden die Emulsionsproben wie im Beispiel 2 beschrieben auf eine Polyesterunterlage vergossen.

Die Belichtung der getrockneten Proben erfolgt gleich wie im Beispiel 5 mit einem Elektronenblitz und zwar auf je einer Hälfte jeder Probe ohne, bzw. mit einem gelben Gelatinefilter KODAK WRATTEN No. 3. Je eine weitere Probe wird mittels einer Wolframglühlampe, der ein gleiches Filter KODAK WRATTEN No. 3 vorgeschaltet war, während 10 Minuten bei einer Beleuchtungsstärke von 100 Lux belichtet.
Zur Entwicklung der Proben wurde der gleiche Entwickler wie im Beispiel 1 verwendet.

Tabelle 6

| Probe Nr. | Desensibilisator Verb. Nr. | (mg/Mol AgBr) | Empfindlichkeit (Flash) log $S_{0.5}$ ohne Filter | mit Filter Kodak 3 | Schleier bei 100 Lux 10 Minuten Filter mit Kodak 3 |
|---|---|---|---|---|---|
| 61 | (10) | 400 | -0.12 | -0.81 | 0.09 |
| 62 | (10) | 800 | -0.19 | -1.06 | 0.06 |
| 63 | ( 9) | 200 | -0.43 | -1.13 | 0.04 |
| 64 | ( 9) | 400 | -0.90 | -1.39 | 0.04 |
| 65 | ( 9) | 800 | -0.78 | -1.59 | 0.02 |

Die obige Tabelle zeigt, dass die Hellraumbeständigkeit genügt, wenn man die zur Belichtung verwendete Wolframlampe ebenfalls mit einem gelben KODAK WRATTEN Filter No. 3 abschirmt. Ausserdem ist die Empfindlichkeit bei Flash-Belichtung selbst in Gegenwart eines KODAK WRATTEN Filters No. 3 noch ausreichend hoch.

Die in diesem Beispiel verwendeten nicht-halogenierten trinukleären Cyanine der Formeln (9) und (10) ergeben, unter den in Beispiel 5 angewandten Bedingungen (100 Lux/10 Minuten weisses Licht) keine genügende Beständigkeit, bzw. zu hohen Schleier.

Patentansprüche

1. Photographisches Negativmaterial mit mindestens einer Schicht, die eine desensibilisierte Silberhalogenidemulsion enthält, dadurch gekennzeichnet, dass diese Schicht als Desensibilisator ein trinukleares Heptamethincyanin oder ein halogeniertes trinukleares Tetramethincyanin mit drei gleichen heterocyclischen Ringsystemen enthält, die gegebenenfalls unterschiedlich substituiert sind und durch drei gleiche, gegebenenfalls mesomere Methinsysteme miteinander verbunden sind.

2. Photographisches Material nach Anspruch 1, dadurch gekennzeichnet, dass der Desensibilisator einer der Formeln

(1) 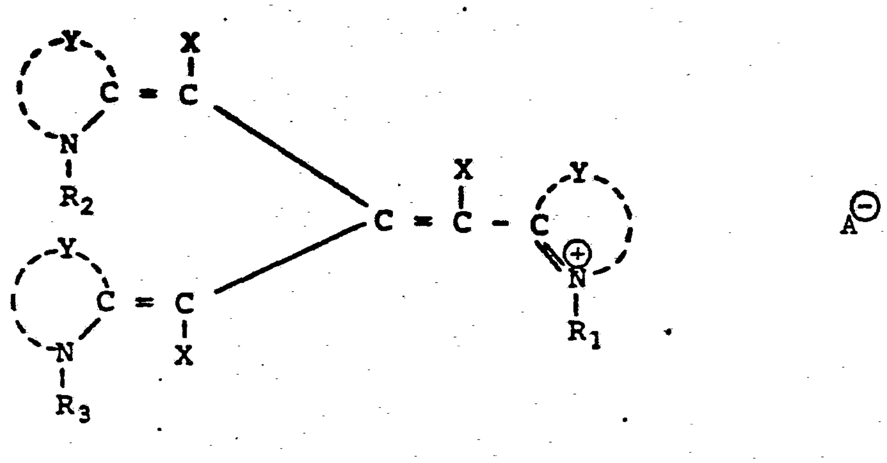

(2) 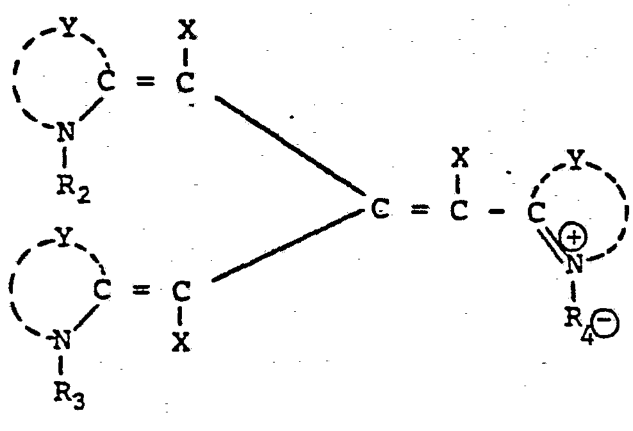

(3)

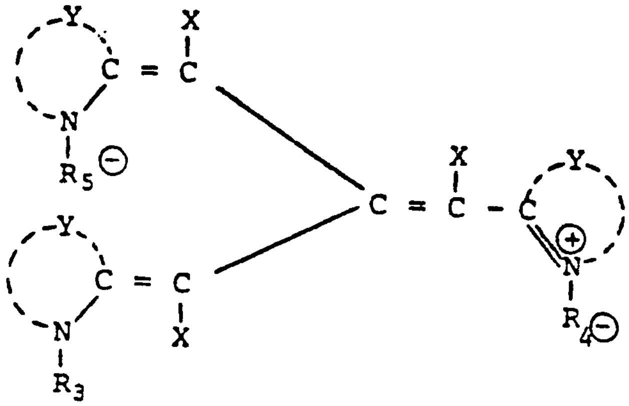

$M^{\oplus}$

oder

(4)

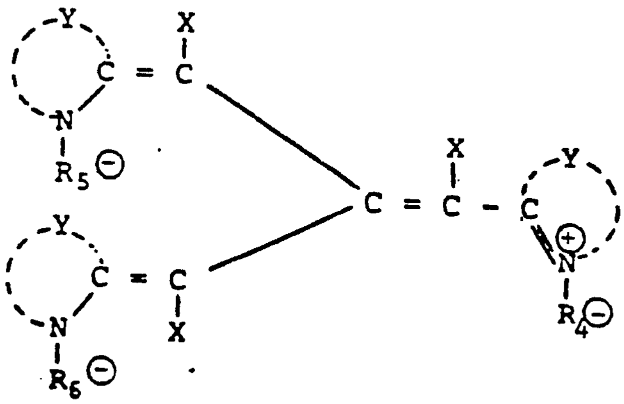

2 $M^{\oplus}$
oder $L^{\oplus\oplus}$
,

(5)

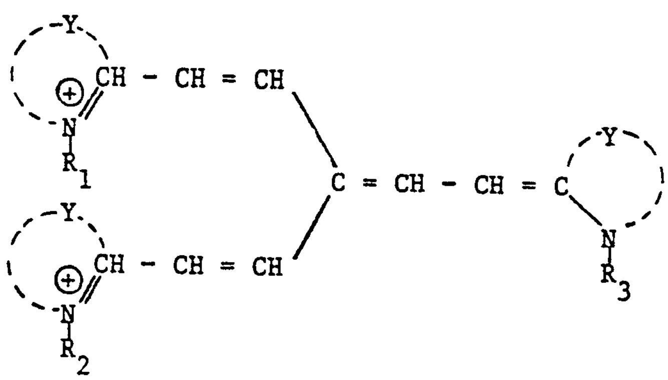

2 $A^{\ominus}$
oder
$B^{\ominus\ominus}$

(6)

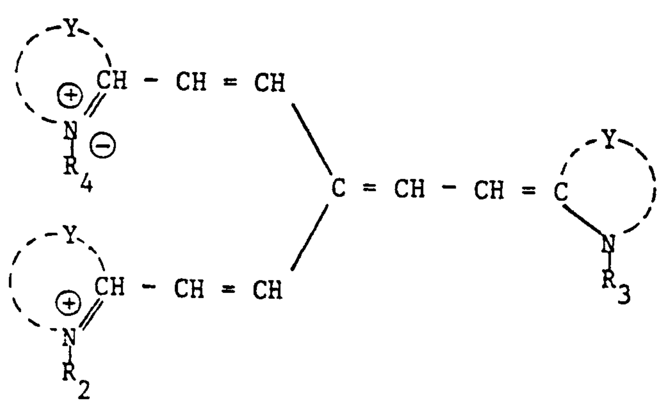

$A^{\ominus}$

(7) 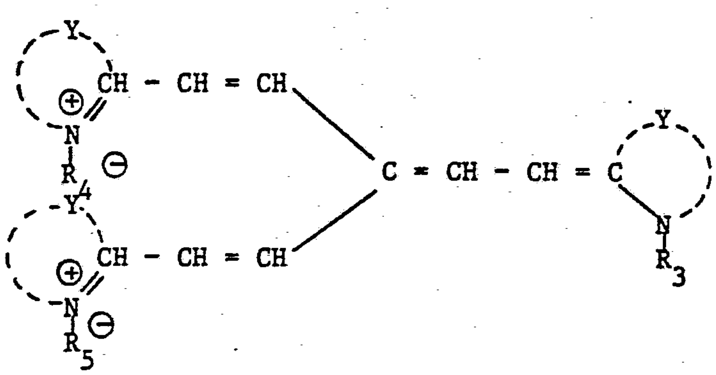

oder

(8) 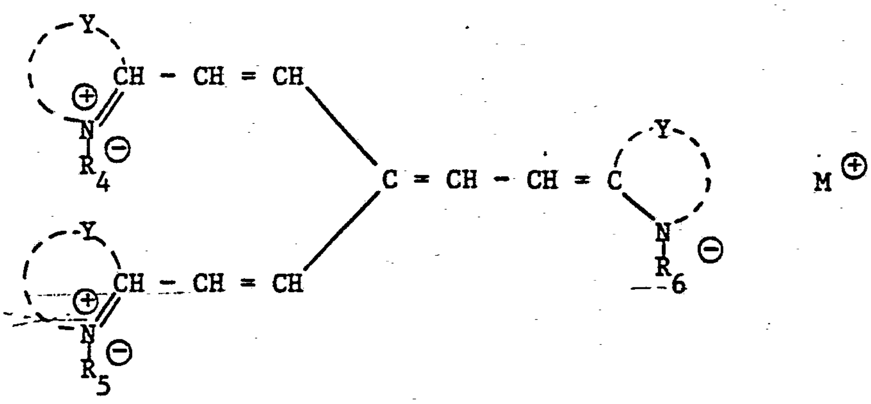

entspricht, worin

Y die zur Vervollständigung eines mono- oder polyheterocyclischen Ringsystems erforderlichen Atome,

$R_1$, $R_2$ und $R_3$ je unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, substituiertes Alkyl mit 1 bis 20 Kohlenstoffatomen oder Alkenyl mit 2 bis 20, vorzugsweise 1 (2) bis 4 Kohlenstoffatomen in der Hauptkette, unsubstituiertes oder mit Halogen, Hydroxyl, Cyan, Alkoxy mit 1 bis 4 Kohlenstoffatomen, Carbalkoxy mit 1 bis 4 Kohlenstoffatomen im Alkoxyrest, Alkyl, Hydroxyalkyl oder Halogenalkyl mit 1 bis 4 Kohlenstoffatomen, Mono- oder Dialkylamino-, Amino-, Carbonamido- oder Sulfonamidogruppen substituiertes Aryl oder Aralkyl,

$R_4$, $R_5$ und $R_6$ je mit einer Carboxyl- oder Sulfogruppe substituiertes Alkyl oder Alkenyl mit 1 (2) bis 20 Kohlenstoffatomen, Aryl, vorzugsweise Phenyl oder Aralkyl, vorzugsweise Benzyl oder Phenyläthyl,

X Wasserstoff, Fluor, Chlor, Brom oder Jod, wobei mindestens ein Rest X Halogen ist,

$A^{\ominus}$ ein einwertiges Anion und

$M^{\oplus}$ ein einwertiges Kation

$L^{\oplus\oplus}$ ein zweiwertiges Kation

$B^{\ominus\ominus}$ ein zweiwertiges Anion

bedeuten.

3. Photographisches Material nach Anspruch 2, dadurch gekennzeichnet, dass das heterocyclische Ringsystem den Formeln

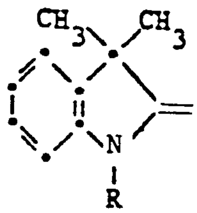 , 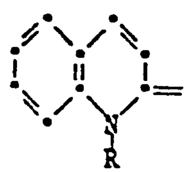 , 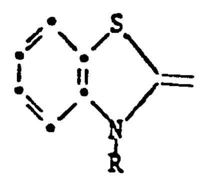 ,

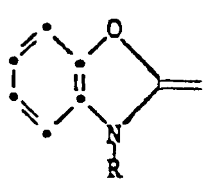 , 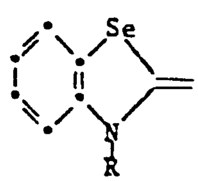 , 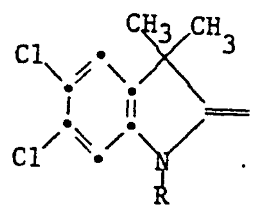 ,

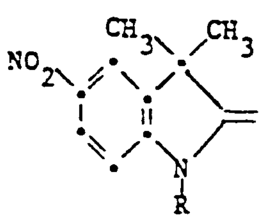 , 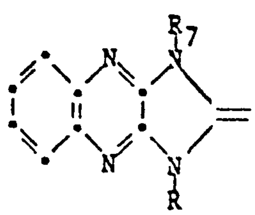 , 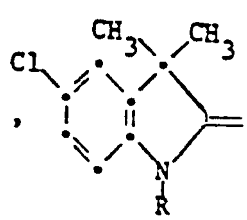 , 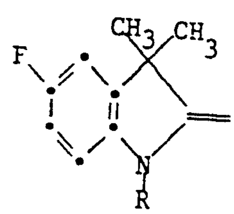

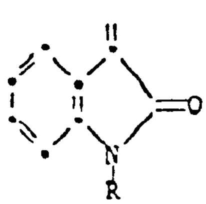 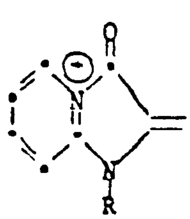 oder 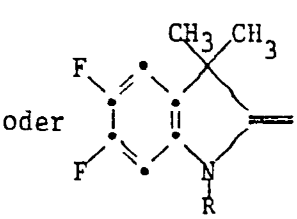

entspricht, worin R einen der im Anspruch 2 genannten Reste $R_1$ bis $R_6$ und $R_7$ Alkyl mit 1 bis 4 Kohlenstoffatomen bedeuten.

4. Photographisches Material nach einem der Ansprüche 1 bis 3, dadurch gekennzeichnet, dass $R_1$, $R_2$ und$R_3$ je Methyl, Aethyl, n-Propyl, i-Propyl, n-Butyl, i-Butyl, Allyl, Methallyl, β-Methoxyäthyl, β-Aethoxyäthyl, β-Hydroxyäthyl, γ-Hydroxypropyl, Phenyl, Benzyl oder β-Phenyläthyl und $R_4$, $R_5$ und $R_6$ je Carboxymethyl, Carboxyäthyl, Carboxypropyl, Carboxybutyl, Sulfoäthyl, Sulfopropyl, Sulfobutyl, p-Sulfobenzyl, Carboxymethyl oder -äthyl, Carbomethoxymethyl oder -äthyl bedeuten.

5. Photographisches Material nach Anspruch 4, dadurch gekennzeichnet, dass der Desensibilisator ein trinuklearer Cyaninfarbstoff der Formeln

(9) 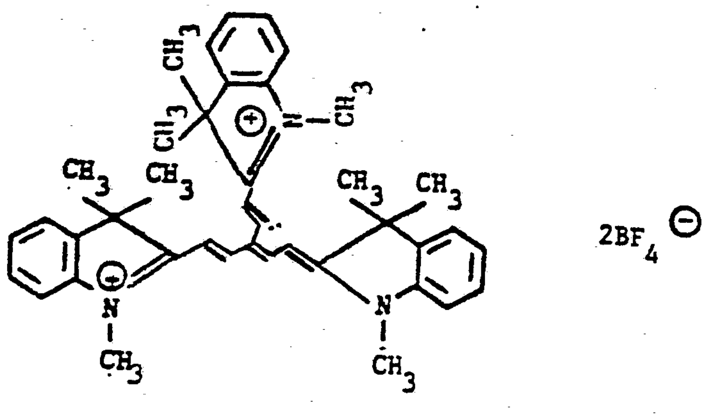

(10) 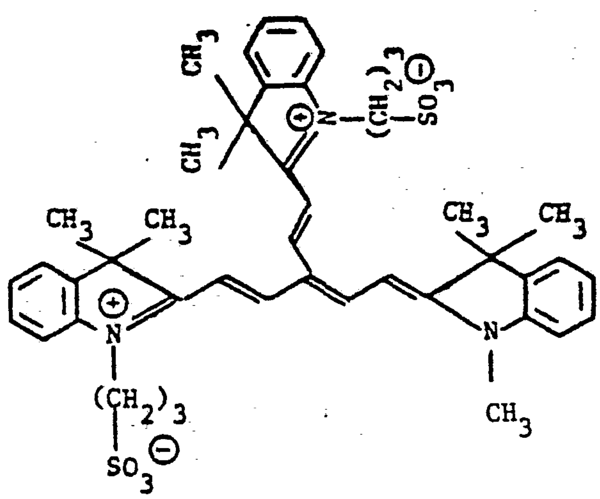

(11) 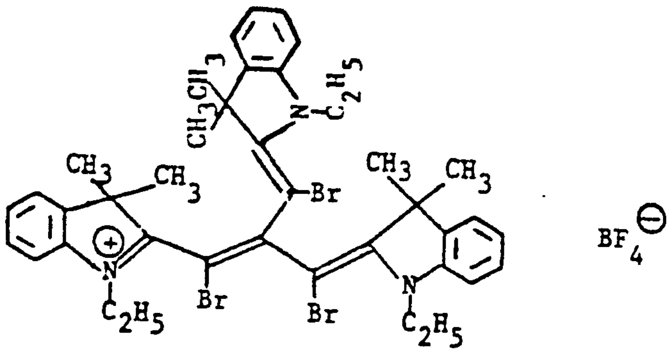

(12) 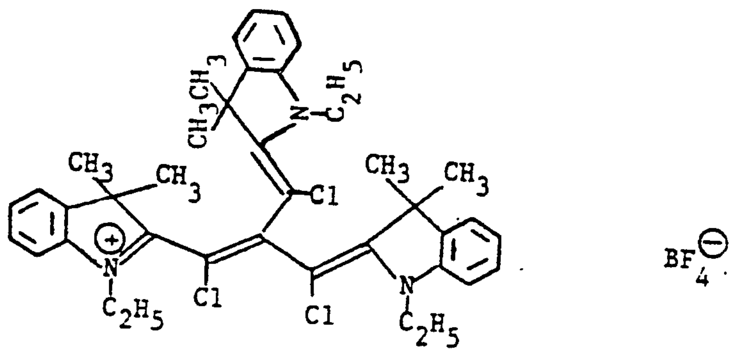

(13) 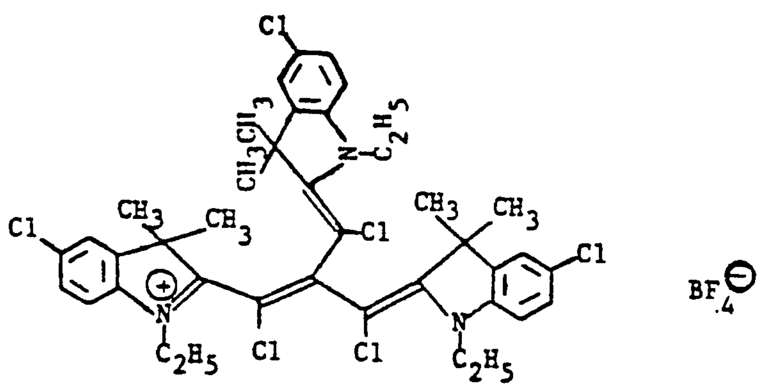

oder

(14) 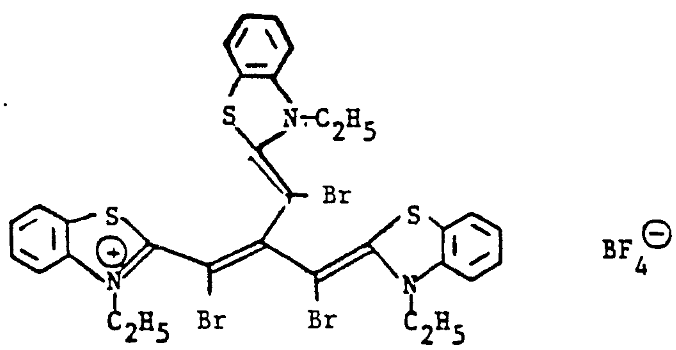

ist.

6. Photographisches Material nach einem der Ansprüche 1 bis 5, dadurch gekennzeichnet, dass die den Desensibilisator enthaltende Emulsion um einen Faktor von mindestens 300 (logE = 2.5) desensibilisiert ist.

7. Photographisches Material nach einem der Ansprüche 1 bis 6, dadurch gekennzeichnet, dass es bei hoher Beleuchtungsstärke eine wesentlich höhere Empfindlichkeit besitzt als bei niedrigerer Beleuchtungsstärke.

8. Photographisches Material nach einem der Ansprüche 6 und 7,dadurch gekennzeichnet, dass es nach 10-minütiger Belichtung mit Gelblicht einer Beleuchtungsstärke von 100 Lux und anschliessender Silberentwicklung eine Dichte von weniger als 0,1 aufweist.

9. Photographisches Material nach einem der Ansprüche 1 bis 8, dadurch gekennzeichnet, dass die desensibilisierte Silberhalogenidemulsion 20 bis 1000 mg eines Desensibilisators pro Mol Silberhalogenid enthält.

10. Verfahren zur Herstellung des photographischen Negativmaterials nach Anspruch 1, dadurch gekennzeichnet, dass man in mindestens eine Silberhalogenidemulsionsschicht als Desensibilisator ein trinukleares Heptamethincyanin oder ein halogeniertes trinukleares Tetramethincyanin mit drei gleichen heterocyclischen Ringsystemen, die gegebenenfalls unterschiedlich substituiert sind und durch drei gleiche, gegebenenfalls mesomere Methinsysteme miteinander verbunden sind, einarbeitet.

11. Verfahren zur Herstellung von photographischen Bildern, unter Verwendung des photographischen Materials nach Anspruch 1.

12. Verwendung eines trinuklearen Heptamethincyanins oder eines trinuklearen Tetramethincyanins mit drei gleichen heterocyclischen Ringsystemen, die gegebenenfalls unterschiedlich substituiert sind und durch drei gleiche, gegebenenfalls mesomere Methinsysteme untereinander verbunden sind, als Desensibilisator in photographischen Negativmaterialien.